# FASCICULE DE BREVET EUROPEEN

(11) **EP 0 719 419 B1**
(45) Date de publication et mention de la délivrance du brevet: **30.07.1997**
(21) Numéro de dépôt: 94926742.1
(22) Date de dépôt: 13.09.1994
(51) Int. Cl.: G01V 3/02

(54) **DISPOSITIF A ELECTRODE POUR PROTEGER ET SUPPORTER UNE ELECTRODE SERVANT A MESURER LA RESISTIVITE D'UN VOLUME DE SOL**
VORRICHTUNG MIT ELEKTRODE ZUM SCHÜTZEN UND UNTERSTÜTZEN EINER ELEKTRODE ZUR MESSUNG DES WIDERSTANDS DES BODENS
ELECTRODE DEVICE FOR PROTECTING AND SUPPORTING AN ELECTRODE USED FOR MEASURING THE RESISTIVITY OF A BODY OF SOIL

(30) Priorité: 15.09.1993 US 120779
(43) Date de publication de la demande: 03.07.1996
(73) Titulaire: HYDRO-QUEBEC, Montréal, Québec H2Z 1A4 (CA)
(72) Inventeur: CHAMPAGNE, Gilles, Y., Ste-Julie, Québec J3E 1J2 (CA); MONARQUE, Alexandre, Boucherville, Québec J4B 4N8 (CA)
(74) Mandataire: Obolensky, Michel
(86) Numéro de dépôt international: CA9400500
(87) Numéro de publication internationale: WO9508129

(56) Documents cités:
- DE-A- 2 810 358
- US-A- 2 526 636
- US-A- 3 810 000

## Description

La présente invention vise un dispositif pour protéger et supporter une électrode servant à mesurer la résistivité d'un volume de sol.

Il existe dans l'art antérieur, le brevet américain No. 2,611,643 de R.V. HIGGINS, délivré le 23 septembre 1952. Ce brevet décrit un dispositif d'arrosage automatique incluant deux électrodes insérées dans le sol.

Il existe également dans l'art antérieur, le brevet américain No. 3,905,551 de Charles Ayme de la Chevrelière, délivré le 16 septembre 1975. Ce brevet décrit des arrangements automatiques d'arrosage de sol qui comprennent une électrode reposant dans une couche supérieure arrosée, et une électrode reposant à l'intérieur d'une couche mouillée en permanence à une profondeur appropriée. Par ces deux électrodes, il est possible de mesurer approximativement la résistance du sol.

Il existe également dans l'art antérieur, les brevets américains suivants qui décrivent différentes sondes de sol:
le brevet américain No. 3,968,428 de Minoru Numoto, délivré le 6 juillet 1976;
le brevet américain No. 3,979,667 de Nigel W. Cornes, délivré le 7 septembre 1976;
le brevet américain No. 4,122,389 de Peter H. Haagen, délivré le 24 octobre 1978;
le brevet américain No. 4,654,598 de Kandiah Arulanandan et al., délivré le 31 mars 1987; et
le brevet américain No. 4,929,885 de Michael R. Dishman, délivré le 29 mai 1990.

Les sondes montrées dans les brevets mentionnés ci-dessus posent un problème important. Les différents dispositifs décrits dans les brevets mentionnés ci-dessus n'enseignent pas et ne décrivent pas les moyens nécessaires pour mesurer de façon relativement précise la résistivité d'un volume de sol donné.

Un objet de la présente invention est de proposer un dispositif pour protéger et supporter une électrode servant à mesurer la résistivité d'un volume de sol, qui permet d'obtenir une plus grande précision que celle obtenue avec les dispositifs connus de l'art antérieur.

La présente invention vise un dispositif à électrode pour protéger et supporter une première électrode servant à mesurer la résistivité d'un volume de sol, caractérisé en ce qu'il comprend:
un membre de support relativement plat ayant deux faces principales opposées et une extrémité inférieure apte à être enfoncée dans le sol pour introduire le membre de support dans le sol, le membre de support étant fait d'un matériau rigide, une des faces du membre de support formant une première ouverture permettant un accès à un premier compartiment pratiqué dans le membre de support; et
un moyen isolant fait d'un matériau électriquement isolant, le moyen isolant permettant de monter l'électrode dans le premier compartiment pour que l'électrode soit électriquement isolée du membre de support, ainsi, en opération, l'électrode est montée dans le membre de support.

Les objets, avantages et autres caractéristiques de la présente invention deviendront plus apparents à la suite de la lecture de la description non limitative suivante d'un mode de réalisation préféré qui est donnée à titre d'exemple seulement avec référence aux dessins.
La Figure 1 est une vue en perspective d'une partie d'un dispositif à électrode en accord avec la présente invention;
La Figure 2 est une vue en perspective d'une autre partie d'un dispositif à électrode en accord avec la présente invention;
La Figure 3 est une vue en perspective d'une électrode apte à coopérer les parties montrées aux Figures 1 et 2;
La Figure 4 est une vue frontale d'un dispositif à électrode qui comprend les parties montrées aux Figures 1 et 2, en combinaison avec l'électrode montrée à la Figure 3;
La Figure 5 est une vue de côté du dispositif montré à la Figure 4;
La Figure 6 est une vue en section selon la ligne VI-VI de la Figure 4;
La Figure 7 est une vue d'en haut du dispositif montré aux Figures 4 et 5;
La Figure 8 est une vue en section d'un câble montré à la Figure 5; et
La Figure 9 est une vue schématique montrant deux dispositifs à électrode disposés dans le sol.

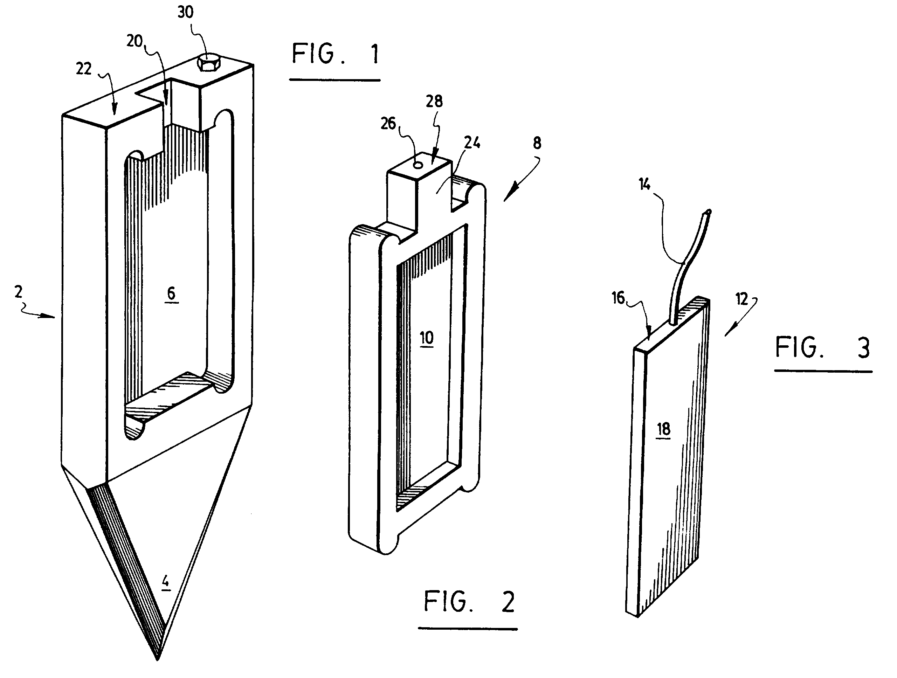

Si on se réfère maintenant aux Figures 1 à 7, le dispositif à électrode montré dans ces Figures est un mode de réalisation préférentiel prévu pour protéger et supporter l'électrode montrée à la Figure 3. Le dispositif comprend des parties qui sont montrées respectivement aux Figures 1 et 2.

Dans la Figure 1, un membre de support 2 relativement plat est montré. Il comprend deux faces principales opposées et une extrémité inférieure 4 pointue apte à être enfoncée dans le sol pour introduire le membre de support 2 dans le sol. Le membre de support 2 est fait d'un matériau rigide. Une des faces du membre de support 2 forme une ouverture permettant un accès au compartiment 6.

Dans la Figure 2, un membre isolant 8 relativement plat est montré. Il comprend deux faces principales opposées. Le membre isolant 8 est monté dans le compartiment 6 de manière qu'une de ses faces soit adjacente à l'ouverture pratiquée dans le membre de support 2.

Le moyen isolant est un membre isolant 8 fait d'un matériau électriquement isolant. Une face du membre isolant 8 forme une ouverture permettant un accès au compartiment 10. Le compartiment 10 est prévu pour recevoir l'électrode 12 montrée à la Figure 3 de manière que, lorsque l'électrode 12 est montée dans le compartiment 10, elle est électriquement isolée du membre de support 2.

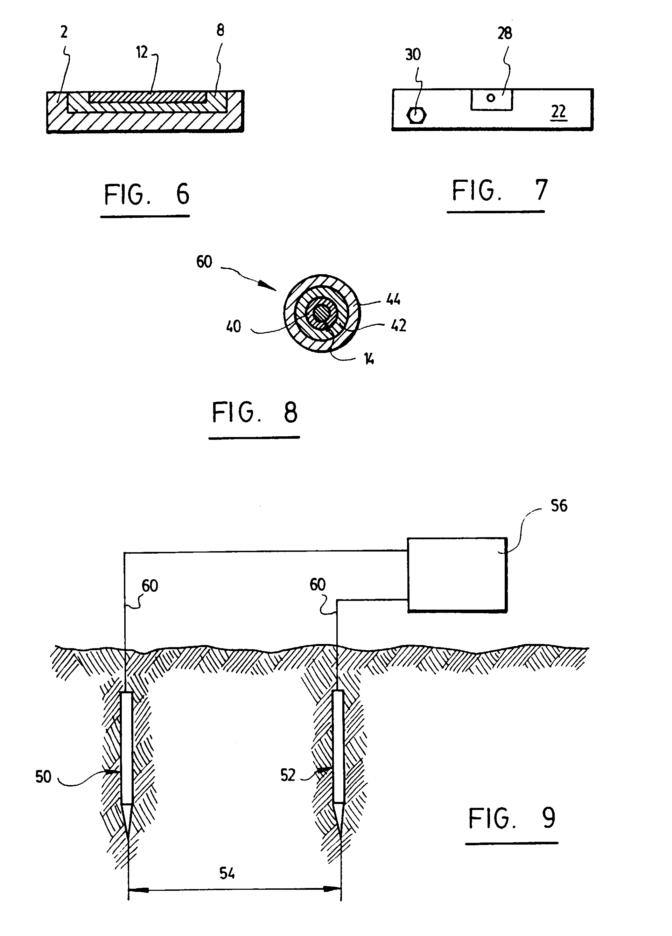

En opération, l'électrode 12 est montée dans le dispositif qui est alors enfoncé dans le sol et disposé substantiellement en face d'une seconde électrode, tel que montré à la Figure 9, de façon à ce que le volume de sol qui se trouve entre les électrodes puisse être mesuré en alimentant et mesurant les électrodes.

L'électrode 12 est faite d'un membre relativement plat. Cette électrode 12 est faite d'un matériau électriquement conducteur. L'électrode 12 est munie d'un connecteur pour la brancher à un conducteur électrique 14. L'électrode 12 a une épaisseur donnée, et le connecteur comprend un joint de soudure en argent qui branche une extrémité du conducteur 14 à une cavité pratiquée dans la bordure supérieure 16 de l'électrode 12.

L'électrode 12 a une face interne faisant face au membre isolant 8 et une autre face 18 prévue pour faire face au volume de sol à mesurer. La face 18 a une forme rectangulaire. Le membre de support 2 forme un passage 20 entre sa bordure supérieure 22 et le compartiment 6. Le membre isolant a une partie 24 qui remplit le passage 20. La partie 24 est munie d'un canal 26 qui relie la face supérieure 28 de la partie 24 au compartiment 10. Ainsi, le conducteur électrique 14 est monté à travers le canal 26 pour brancher l'électrode 12 à l'appareil de mesure 56 (montré à la Figure 9) lorsque l'électrode 12 est montée dans le compartiment 10.

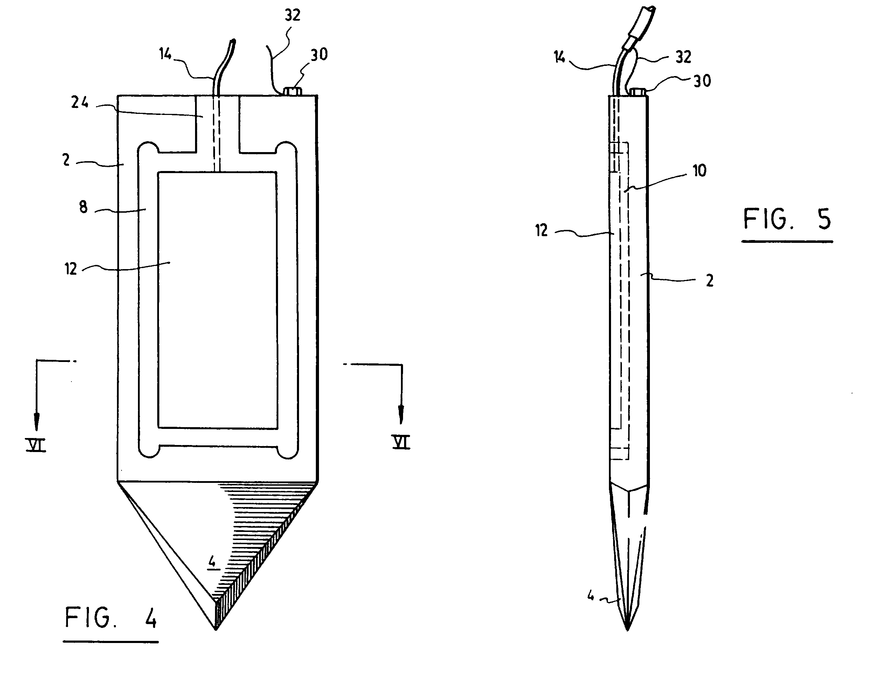

Le membre de support 2 est de préférence fait d'acier. La bordure supérieure 22 est munie d'une borne de connexion 30 pour recevoir un conducteur 32 (montré aux Figures 4 et 5) par qui, en opération, le membre de support 2 est branché à un potentiel de référence.

L'extrémité inférieure pointue 4 du membre de support 2 est munie d'un bord en biseau. La bordure supérieure 22 du membre de support 2 est relativement plate. Le membre isolant 8 est de préférence fait de polymère. Ledit polymère doit être assez résistant pour résister aux contraintes durant l'insertion du dispositif de manière à préserver mécaniquement l'électrode. L'électrode 12 est de préférence faite de cuivre.

De préférence, l'électrode 12 a une longueur de l'ordre de 300 mm, une largeur de l'ordre de 70 mm, et une épaisseur de l'ordre de 3 mm.

Si on se réfère maintenant à la Figure 9, deux dispositifs à électrode 50 et 52 sont montrés en opération. Comme on peut le voir, les deux dispositifs à électrode 50 et 52 sont prévus pour mesurer la résistivité d'un volume de sol. Les valeurs de résistivité qui sont obtenues correspondent au volume de sol défini par l'espace qui se trouve entre les deux électrodes des dispositifs à électrode 50 et 52. La hauteur et la largeur dudit volume de sol est fonction de la surface des électrodes, et de la distance 54 séparant les deux électrodes.

Cette distance 54 entre les électrodes varie en fonction du montage des électrodes dans le sol. Ainsi, cette distance 54 doit être mesurée in situ. Cette distance 54 peut varier de 30 cm à 70 cm pour obtenir des mesures adéquates. De préférence, cette distance 54 est d'environ de 50 cm. Chaque dispositif à électrode 50 ou 52 est individuellement branché à l'appareil de mesure 56 pour mesurer la résistivité du sol.

Si on se réfère maintenant aux Figures 4, 5 et 6, on peut voir que pour limiter la conduction de l'électrode 12 à seulement une de ces six faces, cinq faces de l'électrode 12 doivent être couvertes par le membre isolant 8. La surface de conduction 18 (montrée à la Figure 3) est alors nettoyée et polie de façon à s'assurer que la distribution de courant entre l'électrode 12 et le sol soit la plus homogène possible.

La fonction du membre isolant 8 est d'isoler électriquement le membre de support 2 de l'électrode 12 et de fixer l'électrode 12 par rapport au membre de support 2.

Comme on peut voir la Figure 9, chaque dispositif à électrode 50 ou 52 est branché à l'appareil de mesure 56 au moyen d'un câble 60.

Si on réfère maintenant à la Figure 8, on peut y voir une vue en section de ce câble 60. Il comprend quatre couches de différents matériaux. Au centre, il y a un conducteur électrique 14 fait de plusieurs fils, qui est couvert par une gaine de plastique 40 qui est elle-même couverte par une gaine métallique 42 de façon à former un blindage. Cette gaine métallique 42 est couverte par une couche de caoutchouc 44.

Si on se réfère maintenant aux Figures 4 et 5, le conducteur électrique 14 est utilisé pour amener le signal de mesure de l'électrode correspondante 12 à l'appareil de mesure 56 (montré à la Figure 9). La gaine métallique 42 est utilisée pour constituer une connexion pour mettre le membre de support 2 à un potentiel donné. La connexion de mise à la terre 32 est branchée à la bordure supérieure 22 au moyen d'une vis 30. Ainsi, le membre de support est maintenu à un potentiel de référence.

Les membres de support qui sont branchés à un même appareil de mesure sont également branchés à une mise à la terre commune pour qu'ils soient tous reliés à un même potentiel électrique. Sans une mise à la terre commune, des différences de potentiel peuvent altérer les mesures qui sont enregistrées en faisant baisser la valeur de résistivité mesurée.

Même si la présente invention a été décrite ci-dessus par l'intermédiaire d'un mode de réalisation préféré, il est à noter que toute modification à ce mode de réalisation préféré à l'intérieur de la portée des revendications ne doit pas changer ou altérer la nature et la portée de la présente invention.

## Revendications

1. Un dispositif à électrode pour protéger et supporter une première électrode (12) servant à mesurer la résistivité d'un volume de sol, caractérisé en ce qu'il comprend:
un membre de support (2) relativement plat ayant deux faces principales opposées et une extrémité inférieure (4) apte à être enfoncée dans le sol pour introduire le membre de support (2) dans le sol, le membre de support (2) étant fait d'un matériau rigide, une des faces du membre de support (2) formant une première ouverture permettant un accès à un premier compartiment (6) pratiqué dans le membre de support (2); et
un moyen isolant (8) fait d'un matériau électriquement isolant, le moyen isolant (8) permettant de monter l'électrode (12) dans le premier compartiment (6) pour que l'électrode (12) soit électriquement isolée du membre de support (2), ainsi, en opération, l'électrode (12) est montée dans le membre de support.

2. Un dispositif selon la revendication 1, dans lequel ledit moyen isolant est un membre isolant (8) relativement plat ayant deux faces principales opposées, le membre isolant (8) étant monté dans le premier compartiment (6) de façon à ce qu'une de ses faces soit adjacente à la première ouverture, la face du membre isolant (8) adjacente à l'ouverture formant une seconde ouverture permettant un accès à un second compartiment (10) pratiqué dans le membre isolant (8), le second compartiment (10), étant prévu pour recevoir l'électrode (12) de manière que, lorsque l'électrode (12) est montée dans le second compartiment (10), l'électrode (12) soit électriquement isolée du membre de support (2).

3. Un dispositif selon la revendication 2, caractérisé en ce que la première électrode (12) est faite d'un membre relativement plat, la première électrode (12) étant faite d'un matériau électriquement conducteur, la première électrode (12) étant munie d'un connecteur pour brancher la première électrode (12) à un conducteur électrique (14).

4. Un dispositif selon la revendication 3, caractérisé en ce que la première électrode (12) a une face interne faisant face au membre isolant (8) et une face externe (18) faisant face au volume de sol, la face externe (18) de la première électrode (12) ayant une forme rectangulaire.

5. Un dispositif selon la revendication 4, caractérisé en ce que la première électrode (12) a une épaisseur donnée, et le connecteur comprend un joint de soudure en argent pour brancher une extrémité du conducteur électrique (14) à une cavité pratiquée dans une bordure supérieure (16) de la première électrode (12).

6. Un dispositif selon la revendication 5, caractérisé en ce que le membre de support (2) forme un passage (20) entre sa bordure supérieure (22) et le premier compartiment (6), le membre isolant (8) ayant une partie (24) qui remplit le passage (20), et la partie (24) du membre isolant (8) délimitant un canal (26) qui relie une surface supérieure (28) de la partie (24) au second compartiment (10), ainsi le conducteur électrique (14) est monté à travers le canal (26) pour relier la première électrode (12) à un appareil de mesure (56).

7. Un dispositif selon la revendication 1, caractérisé en ce que le membre de support (2) est fait d'acier.

8. Un dispositif selon la revendication 7, caractérisé en ce qu'une section supérieure (22) du membre de support (2) est munie d'une borne de connexion (30) apte à recevoir un conducteur électrique (32) par lequel, en opération, le membre de support (2) est branché à un potentiel de référence.

9. Un dispositif selon la revendication 1, caractérisé en ce que l'extrémité inférieure du membre de support (2) est pointue et faite d'un bord biseauté.

10. Un dispositif selon la revendication 3, caractérisé en ce que le membre de support (2) a une bordure supérieure (22) qui est relativement plate.

11. Un dispositif selon la revendication 2, caractérisé en ce que le membre isolant (8) est fait d'un polymère.

12. Un dispositif selon la revendication 3, caractérisé en ce que la première électrode (12) est faite de cuivre.

13. Un dispositif selon la revendication 3, caractérisé en ce que la première électrode (12) a une longueur de l'ordre de 300 mm, une largeur de l'ordre de 70 mm et une épaisseur de l'ordre de 3 mm.

14. Utilisation d'une combinaison de dispositifs (50,52) selon la revendication 3, caractérisée en ce que des électrodes sont montées respectivement dans les dispositifs (50) et (52) qui sont alors enfoncés dans le sol et disposés l'un en face de l'autre de façon à mesurer la résistivité d'un volume de sol déterminé, chaque dispositif étant branché à l'appareil de mesure (56).

## Patentansprüche

1. Vorrichtung mit Elektrode zum Schützen und Unterstützen einer ersten Elektrode (12), die dazu dient, den spezifischen elektrischen Widerstand eines Bodenvolumens zu messen, dadurch gekennzeichnet, daß sie enthält:
ein Trägerelement (2), das verhältnismäßig flach ist und zwei gegenüberliegende Hauptflächen sowie ein unteres Ende (4) besitzt, das in den Boden eingetrieben werden kann, um das Trägerelement (2) in den Boden einzuführen, wobei das Trägerelement (2) aus einem starren Werkstoff hergestellt ist, wobei eine der Flächen des Trägerelements (2) eine erste Öffnung bildet, die den Zugriff auf ein erstes Fach (6) ermöglicht, das im Trägerelement (2) ausgebildet ist; und
ein Isoliermittel (8), das aus einem elektrisch isolierenden Werkstoff hergestellt ist, wobei das Isoliermittel (8) ermöglicht, die Elektrode (12) im ersten Fach (6) anzubringen, damit die Elektrode (12) vom Trägerelement (2) elektrisch isoliert ist und damit im Betrieb die Elektrode (12) im Trägerelement angebracht ist.

2. Vorrichtung nach Anspruch 1, in der das Isoliermittel ein Isolierelement (8) ist, das verhältnismäßig flach ist und zwei gegenüberliegende Hauptflächen besitzt, wobei das Isoliermittel (8) in dem ersten Fach (6) in der Weise angebracht ist, daß eine seiner Flächen an die erste Öffnung angrenzt, wobei die an die Öffnung angrenzende Fläche des Isolierelements (8) eine zweite Öffnung bildet, die einen Zugriff auf ein zweites Fach (10) ermöglicht, das im Isolierelement (8) ausgebildet ist, wobei das zweite Fach (10) dazu vorgesehen ist, die Elektrode (12) aufzunehmen, so daß bei im zweiten Fach (10) angebrachter Elektrode (12) diese vom Trägerelement (2) elektrisch isoliert ist.

3. Vorrichtung nach Anspruch 2, dadurch gekennzeichnet, daß die erste Elektrode (12) aus einem verhältnismäßig flachen Element hergestellt ist, aus einem elektrisch leitenden Werkstoff hergestellt ist und mit einem Verbinder versehen ist, um sie an einen elektrischen Leiter (14) anzuschließen.

4. Vorrichtung nach Anspruch 3, dadurch gekennzeichnet, daß die erste Elektrode (12) eine Innenfläche, die dem Isolierelement (8) zugewandt ist, und eine Außenfläche (18), die dem Bodenvolumen zugewandt ist, besitzt, wobei die Außenfläche (18) der ersten Elektrode (12) eine rechtwinklige Form besitzt.

5. Vorrichtung nach Anspruch 4, dadurch gekennzeichnet, daß die erste Elektrode (12) eine gegebene Dicke besitzt und der Verbinder eine Silberlötverbindung aufweist, um ein Ende des elektrischen Leiters (14) mit einem in einem oberen Rand (16) der ersten Elektrode (12) ausgebildeten Hohlraum zu verbinden.

6. Vorrichtung nach Anspruch 5, dadurch gekennzeichnet, daß im Trägerelement (2) zwischen dem oberen Rand (22) und dem ersten Fach (6) ein Durchgang (20) ausgebildet ist, wobei das Isolierelement (8) einen Teil (24) besitzt, der den Durchgang (20) füllt, und wobei der Teil (24) des Isolierelements (8) einen Kanal (26) begrenzt, der eine obere Fläche (28) des Teils (24) mit dem zweiten Fach (10) verbindet, wobei der elektrische Leiter (14) durch den Kanal (26) verläuft, um die erste Elektrode (12) mit einem Meßgerät (56) zu verbinden.

7. Vorrichtung nach Anspruch 1, dadurch gekennzeichnet, daß das Trägerelement (2) aus Stahl hergestellt ist.

8. Vorrichtung nach Anspruch 7, dadurch gekennzeichnet, daß ein oberer Abschnitt (22) des Trägerelements (2) mit einem Verbindungsanschluß (30) versehen ist, der einen elektrischen Leiter (32) aufnehmen kann, durch den im Betrieb das Trägerelement (2) an ein Referenzpotential angeschlossen ist.

9. Vorrichtung nach Anspruch 1, dadurch gekennzeichnet, daß das untere Ende des Trägerelements (2) zugespitzt ist und aus einer angefasten Kante hergestellt ist.

10. Vorrichtung nach Anspruch 3, dadurch gekennzeichnet, daß das Trägerelement (4) einen oberen Rand (22) besitzt, der verhältnismäßig flach ist.

11. Vorrichtung nach Anspruch 2, dadurch gekennzeichnet, daß das Isolierelement (8) aus einem Polymer hergestellt ist.

12. Vorrichtung nach Anspruch 3, dadurch gekennzeichnet, daß die erste Elektrode (12) aus Kupfer hergestellt ist.

13. Vorrichtung nach Anspruch 3, dadurch gekennzeichnet, daß die erste Elektrode (12) eine Länge in der Größenordnung von 300 mm, eine Breite in der Größenordnung von 70 mm und eine Dicke in der Größenordnung von 3 mm besitzt.

14. Verwendung einer Kombination von Vorrichtungen (50, 52) nach Anspruch 3, dadurch gekennzeichnet, daß die Elektroden in den Vorrichtungen (50) und (52) angebracht werden, die dann in den Boden eingetrieben werden und einander zugewandt in der Weise angeordnet werden, daß der spezifische elektrische Widerstand eines bestimmten Bodenvolumens gemessen wird, wobei jede Vorrichtung an das Meßgerät (56) angeschlossen ist.

## Claims

1. An electrode assembly for protecting and supporting a first electrode member (12) for measuring resistivity of a volume of soil, characterized in that it comprises:
a substantially flat support member (2) having two principal opposite faces and a lower end (4) drivable into soil for introduction of the support member (2) into soil, said support member (2) being made of a rigid material, one of the faces of the support member (2) forming a first opening providing an access to a first compartment (6) in the support member (2); and
an insulating means (8) made of an electrically insulating material, said insulating means (8) permitting the mounting of the electrode (12) in the first compartment (6) so that the electrode (12) is electrically insulated from the support member (2), when, in operation, the electrode (12) is mounted in the support member.

2. An assembly according to claim 1, wherein the insulating means is a substantially flat insulating member (8) have two principal opposite faces, the insulating member (8) being mounted in the first compartment (6) in such a manner that one of the faces of the insulating member is adjacent to the first opening, the face of the insulating member (8) adjacent to the opening forming a second opening allowing access to a second compartment (10) within the insulating member (8), the second compartment (10) being for receiving the electrode (12) in such a manner that, when the electrode (12) is mounted in the second compartment (10), the electrode (12) is electrically insulated from the supporting member (2).

3. A soil electrode assembly according to claim 2, characterized in that the first electrode (12) is made of a substantially flat member, the first electrode (12) being made from an electrically conducting material, the first electrode (12) being provided with a connector to connect the first electrode (12) to an electric conductor (14).

4. An assembly according to claim 3, characterized in that the first electrode (12) has an internal face oriented towards the insulating member (8) and an external face (18) oriented towards the volume of soil, said external face (18) of the first electrode (12) having a rectangular form.

5. An assembly according to claim 4, characterized in that the first electrode (12) has a given thickness, and the connector comprises a silver soldered joint to connect an end of the electrical conductor (14) to a cavity made in an upper edge (16) of the first electrode (12).

6. An assembly according to claim 5, characterized in that the support member forms a passage (20) between its upper edge (22) and the first compartment (6), the insulating member (8) having a a portion (24) which fills the passage (20), and said portion (24) of the insulating member (8) defining a channel (26) which connects an upper surface (28) of the portion (24) to the second compartment (10), whereby the electrical conductor (14) is mounted through said channel (26) for connecting the first electrode member (12) to a measuring apparatus (56).

7. An assembly according to claim 1, characterized in that the support member (2) is made of steel.

8. An assembly according to claim 7, characterized in that an upper section (22) of the support member (2) is provided with a connecting terminal (30) for receiving an electrical conductor (32) whereby, in operation, the support member (2) is connected to a reference potential.

9. An assembly according to claim 1, characterized in that the lower extremity of the support member (2) is sharp and made with a bevelled edge.

10. An assembly according to claim 3, characterized in that the support member (2) has an upper edge (22) which is substantially flat.

11. An assembly according to claim 2, characterized in that the insulating member (8) is made of a polymer.

12. An assembly according to claim 3, characterized in that the first electrode (12) is made of copper.

13. An assembly according to claim 3, characterized in that the first electrode (12) has a length of the order of 300 mm, a width of the order of 70 mm and a thickness of the order of 3 mm.

14. Use of a combination of assemblies (50,52) according to claim 3, characterized in that the electrodes are mounted respectively within the assemblies (50) and (52) which are then driven into the soil and placed one in front of the other so as to measure the resistivity of a delimited volume of soil, each assembly being connected to the measuring apparatus (56).
